# EUROPÄISCHE PATENTSCHRIFT

(11) **EP 2 015 519 B1**
(45) Veröffentlichungstag und Bekanntmachung des Hinweises auf die Patenterteilung: **29.09.2010**
(21) Anmeldenummer: 07013408.5
(22) Anmeldetag: 09.07.2007
(51) Int. Cl.: H04L 12/46, H04L 12/66

(54) **Verfahren und Anordnung zur transparenten Übertragung von Ethernet-Signalen über einen Ethernet-Switch**
Method and apparatus for the transparent transmission of Ethernet signals via an Ethernet switch
Procédé et appareil pour la transmission transparente de signaux Ethernet utilisant un commutateur basé sur Ethernet

(43) Veröffentlichungstag der Anmeldung: 14.01.2009
(73) Patentinhaber: Nokia Siemens Networks Oy, 02610 Espoo (FI)
(72) Erfinder: Magerle, Christian, 1220 Wien (AT)
(74) Vertreter: Bruglachner, Thomas E.

(56) Entgegenhaltungen:
- US-A1- 2003 041 146
- US-A1- 2003 214 979
- US-A1- 2003 219 012

## Beschreibung

Die Erfindung betrifft ein Verfahren zur transparenten Übertragung von Ethernet-Signalen über einen Ethernet-Switch.

Die Übertragung von Daten sowohl über kürzere als auch größere Entfernungen hat in den vergangenen Jahrzehnten stark zugenommen. Dabei wird zunehmend eine als Ethernet bezeichnete Datennetztechnologie genutzt. Beim Ethernet erfolgt die Übertragung paketorientiert, d. h., dass Nutzdaten (Payload) in unterschiedlich lange Ethernet-Rahmen eingefügt werden und das so gebildete Ethernet-Paket über ein Transportmedium übertragen wird. Die erforderliche Zusatz-information wie Präambel und Adressen wird in einem Header den Nutzdaten (Payload) vorangestellt. Die Daten können durch Kontrollinformation gesichert werden. Als Schalteinheiten zur Vermittlung der Datenpakete werden in den Netzen sogenannte Switche und Router verwendet. Das Problem hierbei ist, dass diese Schalteinheiten empfangene Ethernet-Signale terminieren und Teile des Ethernet-Headers und die vorhandenen "Interframe Gaps" (die Lücken zwischen Ethernet-Paketen) ändern, kurz, die empfangenen Ethernet-Signale nicht transparent übertragen.

In Weitverkehrsnetzen wird jedoch oft gefordert, dass die komplette Information, also hier das vom Teilnehmer gesendete Ethernet-Signal, ohne jede Veränderung der gesamten Daten, also des Rahmens, der Payload und der Interframe-Gaps, übertragen werden. Es besteht sogar die Forderung, dass die Information auch takttransparent übertragen wird, also der Bittakt erhalten bleibt.

Bisher wurden zur transparenten Übertragung synchroner Systeme wie SDH (synchrone digitale Hierarchie) oder OTN (optisches Transportnetz) verwendet. Diese Übertragungsformen haben aber den Nachteil, dass das Verschalten der Datenpakete auf Ethernet-Ebene nicht möglich ist, da innerhalb dieser Systeme Ethernet-Switche nicht einfach kombinierbar sind. Außerdem ist es zweckmäßig und üblich, mehrere Ethernet-Datensignale mit relativ niedrigerer Datenrate zu einem Signal höherer Datenrate zusammenzufassen, um mit einer geringeren Anzahl von Kanälen (Wellenlängen) das Übertragungsmedium besser nutzen zu können.

Patentschrift US 2003/219012 A1 offenbart ein Verfahren zur transparenten Übertragung von Ethernet-Signalen über einen Switch, derart, dass zuerst die Interframe Gaps zwischen den Ethernet-Paketen gelöscht werden, dann die Ethernet-Pakete zu einem Frame zusammengesetzt werden, welcher schließlich als TDM Datenstrom übertragen wird.

Bei den Weitverkehrsnetzen wird auch gefordert, dass wahlweise die Möglichkeit besteht, innerhalb dieser Netze die Datenströme verschalten zu können. Zur Implementierung dieser Funktion sind entsprechende Ethernet-Switche von verschiedenen Herstellern verfügbar. Die Verwendung dieser Switche verhindert aber, wie bereits ausgeführt, die transparente bzw. takttransparente Übertragung der Ethernet-Teilnehmersignale.

Außerdem soll häufig auch neben der transparenten Übertragung wahlweise auch die klassische als L2-Switching bezeichnete Übertragung möglich sein, bei der Transparenz hinsichtlich Header und Interframe-Gaps nicht erforderlich ist und daher die Ethernet-Signale direkt dem Ethernet-Switch zugeführt werden.

Das Problem der transparenten Übertragung wird durch ein Verfahren nach Anspruch 1 und eine Anordnung nach Anspruch 5 gelöst.

Vorteilhafte Weiterbildungen sind in den abhängigen Ansprüchen angegebenen.

Der Vorteil des erfindungsgemäßen Verfahrens liegt darin, dass die ankommenden Ethernet-Signale, die Ethernet-Rahmen einschließlich der Interframe-Gaps, als Payload in einem weiteren Ethernet-Überrahmen eingefügt werden. Die Adressen können hierbei übernommen (dupliziert) werden. Werden nun Teile des Ethernet-Überrahmens geändert, so bleibt doch deren "Payload", also das komplette Ethernet-Signal (Teilnehmersignal) mit seinen Ethernet-Rahmen einschließlich seiner Lücken, den Interframe-Gaps, unverändert. Die Folge der Ethernet-Überrahmen mit deren zugehörigen Überrahmen-Interframe-Gaps kann dann als Ethernet-Transportsignal mittels eines beliebigen Systems übertragen werden. In Gegenrichtung erfolgt ein Demappen der Ethernet-Überrahmen von ankommenden Ethernet-Transportsignalen und als deren "Payload" werden die ursprüngliche Ethernet-Signale (Teilnehmersignale), die Ethernet-Rahmen und dazugehörige Interframe-Gaps ausgegeben.

Vorteilhafte Weiterbildungen der Erfindung sind in den abhängigen Ansprüchen angegeben.

Ein Ausführungsbeispiel der Erfindung wird anhand von Figuren näher erläutert.

Dabei zeigt
Figur 1 ein Zeitdiagramm zur Übertragung eines Ethernet-Signals und
Figur 2 ein Prinzipschalbild einer hierzu geeigneten Anordnung.

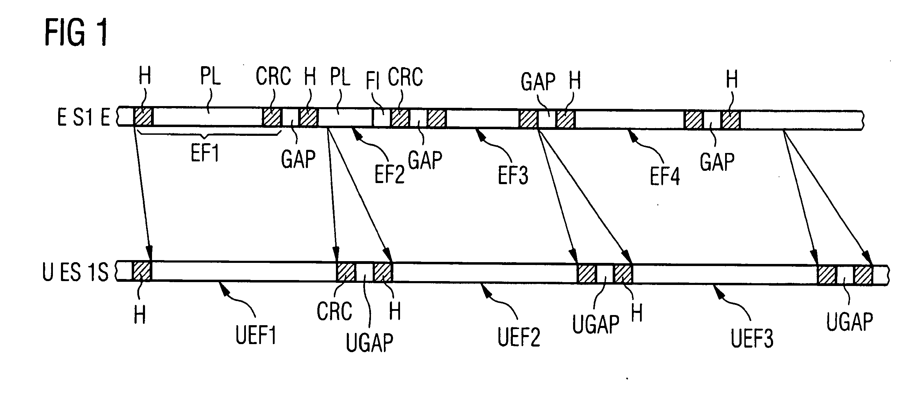

**Figur 1** zeigt im oberen Teil des Zeitdiagramms ein erstes ankommendes Ethernet-Signal ES1E, das von einem Teilnehmer zu einer zur Realisierung der Erfindung geeigneten Anordnung übertragen wird. Der letzte Buchstaben (E - für "empfangen") kennzeichnet es als - von der Anordnung aus gesehen - als ankommendes Ethernet-Signal. Das Ethernet-Signal DS1E besteht aus mehreren Ethernet-Paketen EF1, EF2, EF3, ..., (auch als Ethernet-Frames bezeichnet), zwischen denen jeweils ein datenfreier Zwischenraum liegt, die Interframe-Gaps GAP. Jedes Ethernet-Paket weist einen Pulsrahmen mit Header H, Payload PL, Kontrollinformation CRC und gegebenenfalls, wenn die Payload eine Mindestgröße unterschreitet, Füll-information FI auf. Das komplette empfangende Ethernet-Signal ES1E, also die kompletten Ethernet-Rahmen einschließlich der Interframe-Gaps, werden zwischengespeichert und dann in vorzugsweise größere gleich lange Ethernet-Überrahmen UEF1, UEF2, UEF3, ... eingefügt (z. B. mit 512 Bits Umfang). Die Ethernet-Pakete EF1, EF2, EF3, ... einschließlich der zugehörigen Interframe-Gaps GAP des Ethernet-Signals ES1E bilden somit die Payload eines abgehenden Ethernet-Transportsignals UES1S (S - steht für "senden"), das eine Folge der Ethernet-Überrahmen und wiederum zugehörige Überrahmen-Interframe-Gaps UGAP umfaßt; gegebenenfalls auch wieder Füllinformation. Die Datenrate des abgehenden Ethernet-Transportsignals UES1S ist durch die Rahmeninformation des Überrahmens natürlich größer als die des Ethernet-Signals. Dieses Ethernet-Transportsignal UES1S kann wiederum direkt oder mit weiteren abgehenden Ethernet-Transportsignalen zu einem Ethernet-Signal höherer Ordnung, hier als Ethernet-Multiplexsignal bezeichnet, zusammengefasst in Transportblöcke eines Übertragungssystems eingefügt übertragen werden.

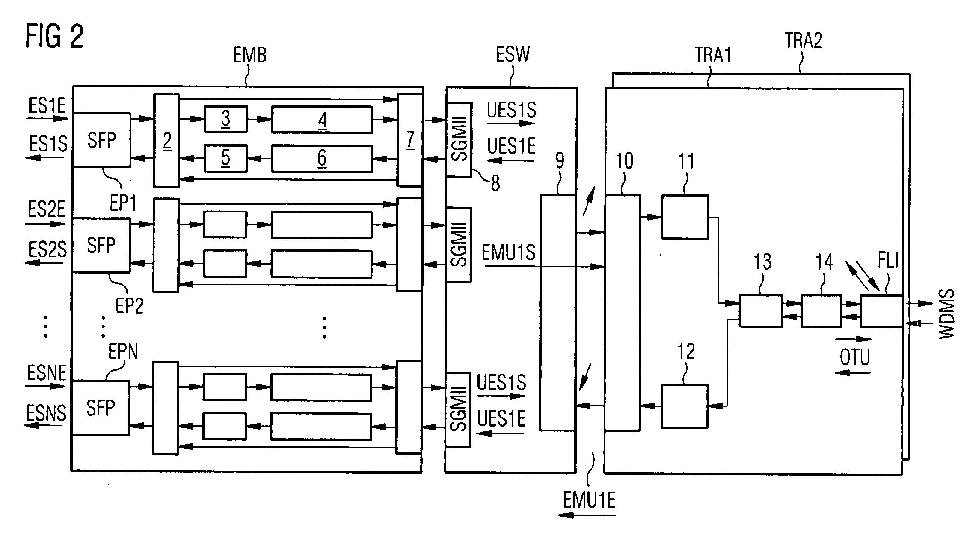

Anhand der in **Figur 2** dargestellten Anordnung wird die transparente Übertragung der Ethernet-Signale näher erläutert. Da die Gegenstelle identisch ist erübrigt sich ihre Darstellung. Diese Anordnung dient zum transparenten Übertragen von ankommenden Ethernet-Signalen ES1E - ESNE -(Teilnehmersignalen) und in Gegenrichtung zum Wiedergewinnen von abgehenden Ethernet-Signalen ES1S - ESNS aus empfangenen Transportsignalen.

Die Anordnung enthält eine Ethernet-Mapper-Baugruppe EMB, an die einerseits mehrere Teilnehmer über Interface-Module EP1 - EPN angeschaltet sind und die andererseits an einen Ethernet-Switch ESW angeschaltet ist. Jeder Teilnehmer kann Ethernet-Signale aussenden und empfangen. Jedem Teilnehmer ist hier auf der Ethernet-Mapper-Baugruppe EMB ein Ethernet-Mapper-Modul zugeordnet, z.B. einem an das erste Teilnehmer-Interface EP1 angeschlossenen ersten Teilnehmer ist ein erstes Ethernet-Mapper-Modul 2,3,4,5,6,7 zugeordnet, das ein ankommende Ethernet-Signal ES1E empfängt und ein abgehendes Ethernet-Transportsignal ES1S aussendet. Der Ethernet-Switch ESW kann die leicht erhöhte Datenrate des Ethernet-Transportsignals ES1S verarbeiten. Den weiteren Teilnehmern sind jeweils gleiche Ethernet-Mapper-Module zugeordnet, die weitere ankommende Ethernet-Signale ES2E - ESNE empfangen und weitere abgehende Ethernet-Signale ES2S - ESNS aussenden. Die weiteren Ethernet-Mapper-Module sind aus Gründen der Übersichtlichkeit nicht bezeichnet.

An den Ethernet-Switch ESW sind wiederum (in der Regel) mehrere Transporteinrichtungen angeschaltet, von denen nur eine Transporteinrichtung TRA1 dargestellt ist und eine zweite TRA2 angedeutet ist; die durch angedeutete schräg verlaufende Verbindungen angeschaltet ist. Die Schnittstellen und weitere normgerechte Komponenten sind als Information für einen Fachmann auf diesem Gebiet zusätzlich mit ihren gängigen Bezeichnungen versehen; auch sie sind nur als weitere Erläuterungen für ein spezielles Ausführungsbeispiel zu verstehen.

Das erste vom ersten Teilnehmer gesendete Ethernet-Signal ESE1 gelangt über das erste Teilnehmer-Interface EP1 (SFP - small form pluggable optical transceiver) zu dem ersten Ethernet-Mapper-Modul 2,3,4,5,6,7. Dort wird es über einen ersten Selektor 2 (Umschalter) und einen Eingangs-Pufferspeicher 3 einem ersten Ethernet-Mapper 4 zugeführt, der es in die Ethernet-Überrahmen UEF1S, UEF2S, UEF3S, ... des abgehenden Ethernet-Transportsignals UES1S einfügt und den Ethernet-Überrahmen jeweils Header und gegebenenfalls Kontrollinformation CRC hinzufügt. Die Rahmenlängen der Ethernet-Überrahmen werden vorzugsweise gleich groß gewählt, um eine Verarbeitung zu vereinfachen. Am Ausgang des Mappers 4 und eines diesem nachgeschalteten zweiten Selektors 7 (Umschalters) liegt somit das fortlaufende Ethernet-Überrahmen UEF1, UEF2, UEF3, ... enthaltende abgehendes Ethernet-Transportsignal UES1S an, das dem Ethernet-Switch ESW über sein EMB-ESW-Interface 8 (SGMII - Seriell Gigabit Media Indipendent Interface) zugeführt wird. Der zweite Selektor 7 verfügt ebenfalls über eine geeignete elektrische Schnittstelle. Die übrigen Ethernet-Mapper-Module generieren entsprechende abgehende Ethernet-Transportsignale UES2S - UESNS.

Die abgehenden Ethernet-Transportsignale UES1S - UESNS können nun beliebig im Ethernet-Switch ESW verschaltet werden und deren Header können geändert werden, ohne die "eingemappten" Ethernet-Signale zu verändern. Von dem Ethernet-Switch werden in diesem Ausführungsbeispiel mehrere Ethernet-Transportsignale zu einem abgehenden Ethernet-Multiplexsignal EMU1S mit hoher Bitrate zusammengefaßt und über ein geeignetes Switch-Interface 9 (XAUI - X Gbit/s Attachement Unit Interface) zur Transport-Einrichtung TRA über deren Transport-Interface 10 (XAUI) übertragen. Dort werden sie einem Framer 11 zugeführt, in ein Transportsignal OTU (Optical Transport Unit), z.B. OTU2 (Optical Transport Unit) oder STM-64 (Synchroner Transport Modul), umgesetzt und über ein Framer-Interface 13 (SFI-4 - Framer Interface Level 4) einem Transceiver 14 zugeführt. In der Regel werden mehrere Ethernet-Transportsignale oder Ethernet-Multiplexsignale als Wellenlängen-Multiplexsignale WDMS über ein Fernleitungs-Interface FLI (WDM-XFP - Wellenlängen-Multiplex-Fernleitungs-Interface) ausgesendet.

Von der Gegenstelle wird ein entsprechendes WDM-Signal empfangen und durch Selektion einer Wellenlänge im Fernleitungs-Interface FLI wird ein Transportsignal separiert und über den Transceiver 14 und das Framer-Interface 13 dem Deframer 12 zugeführt, der den Transportrahmen eliminiert und ein ankommendes Ethernet-Multiplexsignal EMU1E über das Transport-Interface 10 und das Switch-Interface 9 dem Ethernet-Switch ESW zuführt. Der Ethernet-Switch ESW schaltet die im Ethernet-Multiplexsignal EMU1E enthaltenen ankommenden Ethernet-Transportsignale jeweils über eines der EMB-ESW-Interfaces an die Ethernet-Mapper-Module durch, die sie in ein empfangene Ethernet-Transportsignale umsetzen, z.B. wird das ankommenden Ethernet-Transportsignal UES1E vom Ethernet-Switch ESW an das Ethernet-Mapper-Modul 2,3,4,5,6,7 durchgeschaltet, das dann im Ethernet Demapper 6 die Überrahmeninformation und die Überrahmen-Interframe-Gaps entfernt (also alles bis auf die Payload: Das Teilnehmer-Ethernet-Signal), dann das komplette Ethernet-Signal ES1S einschließlich der Interframe-Gaps im Ausgangs-Pufferspeicher 5 speichert und achließlich das komplette Ethernet-Signal ES1S einschließlich der Interframe-Gaps mit einem quasi synchronen Takt an den Teilnehmer aussendet.

Die Selektoren 2 und 7 bilden eine Umschalteinrichtung, die auch ein direktes Durchschalten der ankommenden Ethernet-Signale ES1E - ESNE an den Ethernet-Switch gestattet und so auf Bildung der Ethernet-Überrahmen verzichtet. Die Ethernet-Signale bilden dann direkt die Ethernet-Transportsignale. In Gegenrichtung werden entsprechend die vom Ethernet-Switch durchgeschalteten Ethernet-Transportsignale direkt unter Umgehung von Ethernet-Demapper 6 und Ausgangs-Pufferspeicher 5 ausgegeben.

## Patentansprüche

1. Verfahren zur transparenten Übertragung von Ethernet-Signalen (ES1E, ES2E, ..., ESNE) über einen Ethernet-Switch (ESW),
wobei
Ethernet-Pakete (EF1, EF2, ...) einschließlich zugehöriger Interframe-Gaps (GAP1, GAP2, ...) ankommender Ethernet-Signale (ES1E, ES2E, ..., ESNE) zwischengespeichert und in Ethernet-Überrahmen (UEF1, UEF2, ...) eingefügt werden,
die Ethernet-Überrahmen (UEF1, UEF2, ...) mit den eingefügten Ethernet-Paketen (EF1, EF2, EF3, ...) und den zugehörigen Interframe-Gaps (GAP1, GAP2, ...) als abgehendes Ethernet-Transportsignal (UES1S) dem Ethernet-Switch (ESW) zugeführt werden, von diesem verschaltet und dann übertragen werden,
in Gegenrichtung ankommenden Ethernet-Transportsignale (UES1E) über den Ethernet-Switch (ESW) geführt werden, deren Ethernet-Überrahmeninformation und Überrahmen-Interframe-Gaps (UGAP1, UGAP2, ...) entfernt werden und
die Ethernet-Pakete (EF1, EF2, ...) einschließlich ihrer Interframe-Gaps (GAP1, GAP2, ...) zwischengespeichert und als abgehendes Ethernet-Signal (ES1S - ESNS) quasi synchron ausgegeben werden.

2. Verfahren nach Anspruch 1,
**dadurch gekennzeichnet,**
**dass** die ankommenden Ethernet-Signale (ES1E, ES2E, ..., ESNE) in gleichgroße Ethernet-Überrahmen (UEF1, UEF2, ...) des abgehenden Ethernet-Transportsignals (UES1S) eingefügt werden.

3. Verfahren nach Anspruch 1 oder 2,
**dadurch gekennzeichnet,**
**dass** die ankommenden Ethernet-Signale (ES1E, ES2E, ..., ESNE) wahlweise in Ethernet-Überrahmen (UEF1, UEF2, ...) eingefügt und dann dem Ethernet-Switch (ESW) zugeführt werden oder direkt dem Ethernet-Switch (ESW) zugeführt werden.

4. Verfahren nach einem der vorhergehenden Ansprüche, **dadurch gekennzeichnet,**
**dass** die abgehenden Ethernet-Transportsignale (UES1S, UES2S, ...) in Transportsignale (OTU2) eines Übertragungssystems eingefügt werden.

5. Anordnung zur transparenten Übertragung von Ethernet-Signalen (ES1E, ES2E, ..., ESNE) über einen Ethernet-Switch (ESW),
wobei
eine Ethernet-Mapper-Baugruppe (EMB) mit mehreren Mapper-Modulen (2,3,4,5,6,7) an einen Ethernet-Switch (ESW) angeschaltet ist, so dass
jeweils ein Ethernet-Mapper-Modul (2,3,4,5,6,7) für ein ankommendes Ethernet-Signals (ES1E) und ein abgehendes abgehendes Ethernet-Signal (ES1S) angeordnet ist, wobei
jedes Ethernet-Mapper-Modul (2,3,4,5,6,7) einen Eingangs-Pufferspeicher (3) und einen nachgeschalteten Ethernet-Mapper (4) aufweist und ausgebildet ist, das komplette ankommende Ethernet-Signal (ES1E), also Ethernet-Frames (EF1, EF2, ...) und Interframe-Gaps (GAP1, GAP2, ...) in ein abgehendes Ethernet-Transportsignal (UES1S) einzufügen, das dem Ethernet-Switch (ESW) zugeführt wird, wobei
jedes Ethernet-Mapper-Modul (2,3,4,5,6,7) einen Ethernet-Demapper (6) und einen nachgeschalteten Ausgangs-Pufferspeicher (5) aufweist und ausgebildet ist, ein über den Ethernet-Switch (ESW) geführtes ankommendes Ethernet-Transportsignal (UES1E) durch Entfernen von ÜberrahmenInformation und Überrahmen-Interframe-Gaps (UGAP1, UGAP2, ...) in ein abgehendes Ethernet-Signal (DS1S), das sowohl die Ethernet-Frames als auch die Interframe-Gaps umfasst, umzusetzen, in dem Ausgangs-Pufferspeicher (5) zwischenzuspeichern und quasi synchron auszusenden.

6. Anordnung nach Anspruch 5,
**dadurch gekennzeichnet,**
**dass** der Ethernet-Mapper (4) ausgebildet ist, Ethernet-Signale (ES1E, ES2E, ..., ESNE) in gleichgroße Ethernet-Überrahmen (EUF1, EUF2, ...) des abgehenden Ethernet-Transportsignals (UES1S) einzufügen.

7. Anordnung nach Anspruch 5 oder Anspruch 6,
**dadurch gekennzeichnet,**
**dass** ein Ethernet-Mapper-Modul (2,3,4,5,6,7) eine Umschalteinrichtung (2,7) aufweist, mit der wahlweise ein ankommendes Ethernet-Signal (ES1E - ESNE) direkt oder über Eingangs-Pufferspeicher (3) und den Ethernet-Mapper (4) dem Ethernet-Switch (ESW) zuführbar ist, und ein ankommendes Ethernet-Transportsignal (UES1E - UESNE) über den Ethernet-Demapper (6) und den Ausgangs-Pufferspeicher (5) oder direkt ausgebbar ist.

8. Anordnung nach einem der vorhergehenden Ansprüche,
**dadurch gekennzeichnet,**
**dass** der Ethernet-Switch (ESW) an eine Transporteinrichtung (TRA) angeschaltet ist, die ausgebildet ist, die Ethernet-Transportsignale (UES1S, UES1E; ...), gegebenenfalls umgesetzt in ein Transportsignal (OTU2), auszusenden und empfangen zu können.

## Claims

1. Method for the transparent transmission of Ethernet signals (ES1E, ES2E, ..., ESNE) via an Ethernet switch (ESW), wherein Ethernet packets (EF1, EF2, ...) including associated interframe gaps (GAP1, GAP2, ...) of incoming Ethernet signals (ES1E, ES2E, ..., ESNE) are temporarily stored and inserted into Ethernet superframes (UEF1, UEF2, ...),
the Ethernet superframes (UEF1, UEF2, ...) with the inserted Ethernet packets (EF1, EF2, EF3, ...) and the associated interframe gaps (GAP1, GAP2, ...) are supplied as outgoing Ethernet transport signal (UES1S) to the Ethernet switch (ESW), are switched by the latter and are then transmitted,
Ethernet transport signals (UES1E) incoming in the opposite direction are conducted via the Ethernet switch (ESW), their Ethernet superframe information and superframe interframe gaps (UGAP1, UGAP2, ...) are removed and
the Ethernet packets (EF1, EF2, ...) including their interframe gaps (GAP1, GAP2, ...) are temporarily stored and are output virtually synchronously as outgoing Ethernet signal (ES1S - ESNS).

2. Method according to Claim 1, **characterized in that** the incoming Ethernet signals (ES1E, ES2E, ..., ESNE) are inserted into identically large Ethernet superframes (UEF1, UEF2, ...) of the outgoing Ethernet transport signal (UES1S).

3. Method according to Claim 1 or 2, **characterized in that** the incoming Ethernet signals (ES1E, ES2E, ..., ESNE) are optionally inserted into Ethernet superframes (UEF1, UEF2, ...) and are then supplied to the Ethernet switch (ESW) or are directly supplied to the Ethernet switch (ESW).

4. Method according to one of the preceding claims, **characterized in that** the outgoing Ethernet transport signals (UES1S, UES2S, ...) are inserted into transport signals (OTU2) of a transmission system.

5. Arrangement for the transparent transmission of Ethernet signals (ES1E, ES2E, ..., ESNE) via an Ethernet switch (ESW), wherein an Ethernet mapper assembly (EMB) having a number of mapper modules (2, 3, 4, 5, 6, 7) is connected to an Ethernet switch (ESW) so that
in each case one Ethernet mapper module (2, 3, 4, 5, 6, 7) is arranged for an incoming Ethernet signal (ES1E) and an outgoing Ethernet signal (ES1S), wherein
each Ethernet mapper module (2, 3, 4, 5, 6, 7) has an input buffer memory (3) and a following Ethernet mapper (4) and is configured to insert the complete incoming Ethernet signal (ES1E), that is to say Ethernet frames (EF1, EF2, ...) and interframe gaps (GAP1, GAP2, ...) into an outgoing Ethernet transport signal (UES1S) which is supplied to the Ethernet switch (ESW), wherein
each Ethernet mapper module (2, 3, 4, 5, 6, 7) has an Ethernet demapper (6) and a following output buffer memory (5) and is configured to convert, by removing superframe information and superframe interframe gaps (UGAP1, UGAP2, ...), an incoming Ethernet transport signal (UES1E) conducted via the Ethernet switch (ESW) into an outgoing Ethernet signal (DS1S) which comprises both the Ethernet frames and the interframe gaps, to temporarily store it in the output buffer memory (5) and send it out virtually synchronously.

6. Arrangement according to Claim 5, **characterized in that** the Ethernet mapper (4) is configured to insert Ethernet signals (ES1E, ES2E, ..., ESNE) into identically large Ethernet superframes (EUF1, EUF2, ...) of the outgoing Ethernet transport signal (UES1S).

7. Arrangement according to Claim 5 or Claim 6, **characterized in that** an Ethernet mapper module (2, 3, 4, 5, 6, 7) has a switching device (2, 7) by means of which an incoming Ethernet signal (ES1E - ESNE) can be optionally supplied to the Ethernet switch (ESW) directly or via input buffer memory (3) and the Ethernet mapper (4), and an incoming Ethernet transport signal (UES1E - UESNE) can be output via the Ethernet demapper (6) and the output buffer memory (5) or directly.

8. Arrangement according to one of the preceding claims, **characterized in that** the Ethernet switch (ESW) is connected to a transport device (TRA) which is configured to be able to send out and receive the Ethernet transport signals (UES1S, UES1E; ...), converted into a transport signal (OTU2) if necessary.

## Revendications

1. Procédé de transmission transparente de signaux Ethernet (ES1E, ES2E, ..., ESNE) via un commutateur Ethernet (ESW),
- des paquets Ethernet (EF1, EF2, ...) y compris les temps inter-trames associés (GAP1, GAP2, ...) de signaux Ethernet entrants (ES1E, ES2E, ..., ESNE) étant stockés temporairement et insérés dans des surtrames Ethernet (UEF1, UEF2, ...),
- les surtrames Ethernet (UEF1, UEF2, ...) étant envoyées, avec les paquets Ethernet insérés (EF1, EF2, EF3, ...) et les temps inter-trames associés (GAP1, GAP2, ...), en tant que signal de transport Ethernet sortant (UES1S) au commutateur Ethernet (ESW), commutés par celui-ci, puis transmis,
- des signaux de transport Ethernet qui arrivent dans le sens inverse (UES1E) passant par le commutateur Ethernet (ESW), leur information de surtrame Ethernet et leurs temps inter-trames de surtrames (UGAP1, UGAP2, ...) étant éliminés et
- les paquets Ethernet (EF1, EF2, ...) y compris leurs temps inter-trames (GAP1, GAP2, ...) étant stockés temporairement et produits en sortie de manière quasi synchrone en tant que signal Ethernet sortant (ES1S - ESNS).

2. Procédé selon la revendication 1, **caractérisé en ce que** les signaux Ethernet entrants (ES1E, ES2E, ..., ESNE) sont insérés dans des surtrames Ethernet de même taille (UEF1, UEF2, ...) du signal de transport Ethernet sortant (UES1S).

3. Procédé selon l'une des revendications 1 ou 2, **caractérisé en ce que** les signaux Ethernet entrants (ES1E, ES2E, ..., ESNE), au choix, sont insérés dans des surtrames Ethernet (UEF1, UEF2, ...), puis envoyés au commutateur Ethernet (ESW), ou sont envoyés directement au commutateur Ethernet (ESW).

4. Procédé selon l'une des revendications précédentes, **caractérisé en ce que** les signaux de transport Ethernet sortants (UES1S, UES2S, ...) sont insérés dans des signaux de transport (OTU2) d'un système de transmission.

5. Dispositif pour la transmission transparente de signaux Ethernet (ES1E, ES2E, ..., ESNE) via un commutateur Ethernet (ESW),
- un ensemble de mappeurs Ethernet (EMB) avec plusieurs modules mappeurs (2, 3, 4, 5, 6, 7) étant connecté à un commutateur Ethernet (ESW) de sorte que
- respectivement un module mappeur Ethernet (2, 3, 4, 5, 6, 7) est disposé pour un signal Ethernet entrant (ES1E) et un signal Ethernet sortant (ES1S),
- chaque module mappeur Ethernet (2, 3, 4, 5, 6, 7) comportant une mémoire tampon d'entrée (3) et un mappeur Ethernet en aval (4) et étant réalisé pour insérer le signal Ethernet entrant complet (ES1E), c'est-à-dire des trames Ethernet (EF1, EF2, ...) et des temps inter-trames (GAP1, GAP2, ...), dans un signal de transport Ethernet sortant (UES1S) qui est envoyé au commutateur Ethernet (ESW),
- chaque module mappeur Ethernet (2, 3, 4, 5, 6, 7) comportant un démappeur Ethernet (6) et une mémoire tampon de sortie en aval (5) et étant réalisé pour convertir un signal de transport Ethernet entrant (UES1E) qui passe par le commutateur Ethernet (ESW), par élimination d'informations de surtrames et de temps inter-trames de surtrames (UGAP1, UGAP2, ...), en un signal Ethernet sortant (DS1S) qui comprend tant les trames Ethernet que les temps inter-trames, pour le stocker temporairement dans la mémoire tampon de sortie (5) et l'émettre de manière quasi synchrone.

6. Dispositif selon la revendication 5, **caractérisé en ce que** le mappeur Ethernet (4) est réalisé pour insérer des signaux Ethernet (ES1E, ES2E, ..., ESNE) dans des surtrames Ethernet de même taille (EUF1, EUF2, ...) du signal de transport Ethernet sortant (UES1S).

7. Dispositif selon la revendication 5 ou la revendication 6, **caractérisé en ce qu'**un module mappeur Ethernet (2, 3, 4, 5, 6, 7) comporte un dispositif de commutation (2, 7) permettant, au choix, d'envoyer un signal Ethernet entrant (ES1E - ESNE) au commutateur Ethernet (ESW) directement ou via la mémoire tampon d'entrée (3) et le mappeur Ethernet (4) et de produire en sortie un signal de transport Ethernet entrant (UES1E - UESNE) via le démappeur Ethernet (6) et la mémoire tampon de sortie (5) ou directement.

8. Dispositif selon l'une des revendications précédentes, **caractérisé en ce que** le commutateur Ethernet (ESW) est connecté à un dispositif de transport (TRA) qui est réalisé pour pouvoir émettre et recevoir les signaux de transport Ethernet (UES1S, UES1E, ...), le cas échéant convertis en un signal de transport (OTU2).
